# EUROPEAN PATENT SPECIFICATION

(11) **EP 2 977 805 B1**
(45) Date of publication and mention of the grant of the patent: **10.05.2017**
(21) Application number: 14769393.1
(22) Date of filing: 20.03.2014
(51) Int. Cl.: G02B 6/44, C03C 25/24, C08K 5/13, C08L 71/12, C08L 77/00, D06M 15/59, C03C 25/10

(54) **OPTICAL-FIBER CABLE AND MOVING VEHICLE**
GLASFASERKABEL UND BEWEGTES FAHRZEUG
CÂBLE EN FIBRE OPTIQUE ET VÉHICULE MOBILE

(30) Priority: 22.03.2013 JP 2013059305
(43) Date of publication of application: 27.01.2016
(73) Proprietor: Mitsubishi Rayon Co., Ltd., Tokyo 100-8253 (JP)
(72) Inventor: KIMURA, Tsuyoshi, Toyama-shi Toyama 931-8601 (JP); TSUKAMOTO, Yoshihiro, Toyama-shi Toyama 931-8601 (JP); ASANO, Kouji, Toyama-shi Toyama 931-8601 (JP)
(74) Representative: TBK
(86) International application number: PCT/JP2014/057788
(87) International publication number: WO 2014/148609

(56) References cited:
- EP-A1- 1 596 234
- EP-A2- 1 376 156
- WO-A1-2008/084703
- JP-A- H10 319 281
- JP-A- 2008 197 302
- JP-A- 2008 197 302
- JP-A- 2009 237 571
- JP-A- 2010 066 382

## Description

### Field of the Invention

The present invention relates to an optical fiber cable and a mobile body.

### Background Art

Optical fibers are used for data transmission and sensor applications; their types are optical glass fibers made of glass such as silica, and plastic optical fibers made of plastics (hereinafter referred to as "POF").

A POF is mainly structured to have a core made of highly transparent resin such as polymethyl methacrylate, and around its periphery, resin with a refractive index lower than that of the resin of the core. Compared with glass optical fibers, the transmission distance of POFs is shorter, but POFs have advantages such as easier handling, simplified formation of connectors, lightweight and inexpensive materials, and diameters that can be set to be greater. Thus, POFs are used in diversified applications such as illumination, sensors, and communication systems, and the production of POFs is increasing.

When optical fibers are used, it is rare to use them alone, except for illumination purposes. Generally, optical fibers are coated with resins to form optical fiber cables to provide them with mechanical strength, heat-resistance and flame-retardancy properties and the like.

Especially, when used as communication wiring in automobiles, optical fiber cables are placed in high-temperature conditions because of the heat generated in engines or the like, summer-time high temperatures in vehicles, and so forth. Thus, coating materials for optical fiber cables are required to have properties such as high heat resistance and excellent dimensional stability.

Moreover, when used as communication wiring in automobiles, optical fiber cables are installed in the vicinity of flammable materials such as oil, electrolytes and gasoline. Thus, optical fiber cables are also required to have high chemical resistance and flame retardancy properties.

Since polyamide resins are known to have sufficient heat resistance and dimensional stability, they are often used as coating materials for optical fibers. However, the optical characteristics and mechanical strength of optical fiber cables coated with polyamide resins or polyamide elastomer resins may be lowered when used for a long duration in high-temperature conditions.

To enhance properties such as heat resistance, various improvements have been proposed, for example, using polymers containing fluorine atoms for the cladding of a POF (Patent Publications 1 and 2), using specific polyester for the core (or for the core and cladding) of a POF (Patent Publications 3 and 4), and the like.

### PRIOR ART PUBLICATION

### PATENT PUBLICATION

Patent publication 1: JP2010-237414A
Patent publication 2: JP2011-209487A
Patent publication 3: JP2007-320989A
Patent publication 4: JP2011-75736A

EP1376156 (A2) relates to an optical cable having a fiber core and fiber cladding adhered with inner and outer external layers respectively comprising molding compositions (A and B) containing polyamides (I,II), wherein polyamide (I) is selected from PA 11, PA 12, PA 1012, PA 1212, copolyamide of at least two of PA 11, PA 12, PA 1012, PA 1212 containing not more than 30 mol% of comonomer, and their mixtures, and contains at least 50 micro-eq/g of amino end groups, and wherein polyamide (II) is selected from PA 11, PA 12, PA 1012, PA 1212, copolyamide of at least two of PA 11, PA 12, PA 1012, PA 1212 containing not more than 30 mol% of comonomer, polyetheramide of the above polymers, and their mixtures.

EP1596234 (A1) relates to a buffered optical fiber, which is provided with a second coating layer on an outer peripheral surface of an optical fiber produced by providing a first coating layer on an outer peripheral surface of a glass fiber. A second resin composition constituting the second coating layer comprises 100 to 250 weight parts of metal hydroxide and 10 to 100 weight parts of a nitrogen-based flame retardant material per 100 weight parts of the base polymer. Further, the second resin composition does not contain halogenated materials.

JP2008197302 (A) relates to an optical fiber cord having an external coating layer on the outer periphery of an optical fiber core. The external coating layer is composed of polymer alloy containing polyphenylene ether.

### SUMMARY OF THE INVENTION

### PROBLEMS TO BE SOLVED BY THE INVENTION

However, when the cladding of a POF is made of polymers containing fluorine atoms as described in Patent Publications 1 and 2, heat resistance is enhanced but long-term heat resistance is hard to achieve. In addition, it is difficult to perform broadband communications when the core of a POF is made of a specific polyester as described in Patent Publication 3 and 4.

Considering the above problems, the primary objective of the present invention is to provide optical fiber cables that exhibit heat resistance for a long duration (long-term heat resistance). Also, another objective of the present invention is to provide optical fiber cables that exhibit sufficient flame retardancy and mechanical characteristics in addition to long-term heat resistance.

### SOLUTIONS TO THE PROBLEMS

The inventors of the present invention have conducted intensive studies and found that the above objectives are achieved by using a combination of specific resins. The present invention is completed accordingly.

One aspect of the present invention is an optical fiber cable formed with an optical fiber and a coating layer, made up of at least an inner coating layer and an outer coating layer provided around the outer periphery of the optical fiber. The material for the inner coating layer contains polyamide resin (A), and the material for the outer coating layer contains polyamide resin (C), which includes at least polyphenylene ether resin (B) or semi-aromatic polyamide resin (C1), wherein, if the material for forming the outer coating layer contains polyphenylene ether resin (B), the polyamide resin (C) is made of at least one resin selected from polyamide 6, polyamide 66 and polyamide MXD6.

Another aspect of the invention provides a mobile body having the above-described optical fiber cable.

### EFFECTS OF THE INVENTION

An optical fiber cable according to an embodiment of the present invention exhibits long-term heat resistance. Also, in addition to long-term heat resistance, the optical fiber cable according to another embodiment of the present invention exhibits sufficient flame retardancy and mechanical characteristics.

### DETAILED DESCRIPTION OF THE EMBODIMENTS

Preferred embodiments of the present invention are described below.

### (1) Coating Material

The coating layer of an optical fiber cable according to an embodiment of the present invention includes at least an inner coating layer and an outer coating layer. The material for forming an inner coating layer (inner coating material) contains polyamide (PA) resin (A), and the material for forming an outer coating layer (outer coating material) contains polyamide (PA) resin (C). The outer coating material contains at least either polyphenylene ether (PPE) resin (B) or semi-aromatic polyamide resin (C1).

A first example of the outer coating material contains PPE resin (B) and PA resin (C) as its main components. When PPE resin (B) and PA resin (C) are contained as main components of the coating layer, the optical fiber cable is provided especially with long-term heat resistance in addition to mechanical characteristics such as sufficient mechanical strength. For example, the outer coating layer may be a PPE-alloy resin made of PPE resin (B) and PA resin (C) contained as main components. Such an outer coating material may be formed only with PPE resin (B) and PA resin (C), or only with a PPE alloy resin. Alternatively, the outer coating material may be a composition formed by adding various additives such as a flame retardant and an antioxidant to resins (B) and (C) or to a PPE-alloy resin.

Moreover, as a second example of the coating material, PA resin (C) may contain semi-aromatic polyamide resin (C1). When the outer coating material contains semi-aromatic polyamide resin (C1), especially long-term heat resistance is provided for the optical fiber cable. The outer coating material may be made only of semi-aromatic polyamide resin (C1), or may be a composition formed by adding various additives such as a flame retardant and an antioxidant along with other resins (such as aliphatic polyamide resin (G)) to semi-aromatic polyamide resin (C1). An example of the resin component of the outer coating material is a semi-aromatic polyamide-alloy resin made of semi-aromatic polyamide resin (C1) and aliphatic polyamide resin (G).

### (1-1) Polyphenylene Ether (PPE) Resin (B)

The resin type of PPE resin (B) used in the embodiments of the present invention is not limited specifically, and any known PPE resin may be used.

Examples of PPE resin (B) are poly(2,6-dimethyl-1,4-phenylene)ether, poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether, poly(2-ethyl-6-propyl-1,4-phenylene)ether, poly(2,6-dimethoxy-1,4-phenylene)ether, poly(2,6-dichloromethyl-1,4-phenylene)ether, poly(2,6-dibromomethyl-1,4-phenylene)ether, poly(2,6-diphenyl-1,4-phenylene)ether, poly(2,6-ditolyl-1,4-phenylene)ether, poly(2,6-dichloro-1,4-phenylene)ether, poly(2,6-dibenzyl-1,4-phenylene)ether, poly(2,5-dimethyl-1,4-phenylene)ether, and the like. Those listed above may be used alone or in combination thereof. Among them, poly(2,6-dimethyl-1,4-phenylene)ether is particularly preferable because its generic type is easy to obtain.

### (1-2) Polyamide (PA) Resin (C)

When the outer coating material contains PPE resin (B) and PA resin (C), the PA resin (C) is preferred to be such a type that has excellent compatibility with PPE resin (B) or that is capable of forming an alloy resin with PPE resin (B). Such an outer coating material provides long-term heat resistance as well as sufficient mechanical strength to the optical fiber cable. When an outer coating material containing PA resin (C) is used to coat the outer periphery of an optical fiber coated with polyamide resin, the obtained outer coating layer exhibits excellent adhesiveness to the coating layer made of polyamide resin formed underneath.

The resin type of PA resin (C) is at least one selected from polyamide 6, polyamide 66 and polyamide MXD6. Those PA resins may be used alone or in combination thereof.

Polyamide 6, polyamide 66 and polyamide MXD6 are used, since they have high heat resistance and low oxygen permeability properties.

### (1-3) Combining PPE resin (B) and PA resin (C) / PPE-alloy Resin

The outer coating material according to an embodiment of the present invention contains PPE resin (B) and PA resin (C) as its main components, or the main component of the material may be a PPE-alloy resin made of those resins (B) and (C). Here, main components indicate that the total content of PPE resin (B) and PA resin (C) (or the content of a PPE-alloy resin) in the outer coating material is 50 mass% or greater. The content is preferred to be 55 mass% or greater, more preferably 60 mass% or greater, even more preferably 70 mass% or greater.

The ratio to mix PPE resin (B) and PA resin (C) is not limited specifically, and they may be mixed at any ratio as long as long-term heat resistance and sufficient mechanical strength are achieved. For example, to 100 parts by mass of PPE resin (B), 10∼300 parts by mass, more preferably 35∼200 parts by mass, even more preferably 50∼100 parts by mass, of PA resin (C) may be mixed in. Namely, PA resin (C) and PPE resin (B) are preferred to have a mass ratio (C/B) in a range of 10/100∼300/100, more preferably 35/100∼200/100, even more preferably 50/100∼100/100.

When the mixing ratio of PA resin (C) is set at 10 parts by mass or greater, sufficient long-term heat resistance and mechanical strength are provided for the PPE-alloy resin. When the mixing ratio of PA resin (C) is set at 300 parts by mass or less, the melting viscosity of the PPE-alloy resin is lowered. Accordingly, when such an outer coating material is coated on an optical fiber, proper flexibility is provided for the optical fiber cable.

When PPE resin (B) and PA resin (C) are mixed to form an alloy resin, the method is not limited specifically as long as both resins are mixed well or homogeneously dispersed. For example, an alloy resin may be formed by using a compatibilizer capable of dispersing both resins homogeneously. A compatibilizer is dispersed on the interface of PPE resin (B) and PA resin (C) and lowers their interfacial tension. Accordingly, resins are interdispersed well.

The type of a compatibilizer is not limited specifically, and is preferred to be those having polar reactive functional groups such as carboxyl groups, epoxy groups and amino groups. A compatibilizer having a polar reactive group is capable of forming a hydrogen bond between the amide group of PA resin (C) and the ether group of PPE resin (B) so that both resins are interdispersed well.

Examples of a compatibilizer having a carboxyl group are unsaturated carboxylic acids such as maleic anhydride, maleic acid, fumaric acid, maleimide, maleic hydrazide, acrylic acid and methacrylic acid; esters, acidic amides and anhydrides of such unsaturated carboxylic acids; and the like.

Examples of a compatibilizer having an epoxy group are epichlorohydrin, 2-methyl epichlorohydrin, 2,2-bis(4-glycidyl phenyl ether) propane, epoxy resins and the like.

Examples of a compatibilizer having an amino group are aliphatic amine compounds such as hexamethylene diamine and tetramethylenediamine; aliphatic compounds such as dimethylaminoethyl (meth)acrylate, diethylaminoethyl (meth)acrylate, and dimethylaminopropyl (meth)acrylamide; aromatic compounds such as N,N-dimethylamino styrene; heterocyclic compounds such as morpholinoethyl (meth)acrylate, 4-vinyl pyridine, 2-vinyl pyridine, N-vinyl pyrrole, N-vinyl pyrrolidone and N-vinyl-thiopyrrolidone; and the like.

The amount of a compatibilizer to be used is not limited specifically as long as PPE resin (B) and PA resin (C) are interdispersed well. For example, the amount of a compatibilizer is 0.1∼20 mass%, preferably 1∼15 mass%, more preferably 2∼10 mass% of the total amount of PPE resin (B) and PA resin (C).

By setting the content of a compatibilizer at 0.5 mass% or greater, PPE resin and PA resin are interdispersed well, and thus long-term heat resistance and sufficient mechanical strength are achieved. By setting the content of a compatibilizer at 20 mass% or less, a higher degree of flexibility is achieved without reducing heat resistance properties of the PPE-alloy resin.

The PPE-alloy resin in an embodiment of the present invention may be individually produced, or any known or commercially available PPE-alloy resin may be used. The method for producing a PPE-alloy resin is not limited specifically, as long as PPE resin and PA resin are sufficiently interdispersed. For example, after a compatibilizer is added to PPE resin and mixed well, PA resin may be added therein; after a compatibilizer is added to PA resin and mixed well, PPE resin may be added therein; or a compatibilizer may be added after PPE resin and PA resin are mixed.

Examples of commercially available PPE-alloy resin are NORYL GTX™ series made by SABIC, LEMALLOY™ series made by Mitsubishi Engineering Plastics Corporation, and the like.

### (1-4) Semi-aromatic Polyamide Resin (C1)

Semi-aromatic polyamide resin (C1) may be contained as the main component in the outer coating material according to an embodiment of the present invention. Here, the main component indicates that the content of semi-aromatic polyamide resin (C1) in the outer coating material is 50 mass% or greater. The content is preferred to be 55 mass% or greater, more preferably 60 mass% or greater, even more preferably 70 mass% or greater. Semi-aromatic polyamide resin (C1) may be used as the only resin material in the outer coating material.

Semi-aromatic polyamide resin (C1) in an embodiment of the present invention contains an aromatic ring in part of the main chain skeleton. Examples of such resin are polyamide resins obtained through polycondensation of aromatic diamine and dicarboxylic acid, and polyamide resins obtained through polycondensation of diamine and aromatic dicarboxylic acid. Among those semi-aromatic polyamide resins (C1), it is preferred to use polyamide resin having a meta-position-substituted benzene ring, since its crystallinity is not too high and its melting point is suitable for coating. A meta-position-substituted benzene ring corresponds to a benzene ring structure having two substituents in the 1-position and 3-position. Examples of polyamide resin having a meta-position-substituted benzene ring are polyamide MXD6 and polyamide 6I.

As for an aliphatic diamine to form semi-aromatic polyamide resin (C1), a linear aliphatic diamine represented by 1, x-alkane diamines ("x" indicates a whole number of 2∼20) may be used. In particular, examples are 1,2-ethylenediamine, 1,4-butanediamine, 1,5-pentanediamine, 1,6-hexanediamine, 1,9-nonanediamine, 1,10-decanediamine and 1,11-undecanediamine.

Examples of aromatic diamines to form semi-aromatic polyamide resin (C1) are ortho-xylylenediamine, meta-xylylenediamine, and para-xylylenediamine.

Examples of aliphatic dicarboxylic acid to form semi-aromatic polyamide resin (C1) are oxalic acid (ethanedioic acid), terephthalic acid, malonic acid (propanedioic acid), succinic acid (butanedioic acid), glutaric acid (pentanedioic acid), adipic acid (hexanedioic acid), pimelic acid (heptanedioic acid), suberic acid (octanedioic acid), azelaic acid (nonanedioic acid), sebacic acid (decanoic acid).

Examples of aromatic dicarboxylic acid to form semi-aromatic polyamide resin (C1) are phthalic acid, isophthalic acid and terephthalic acid, which have two carboxyl groups substituted on the benzene ring.

By condensation-polymerizing dicarboxylic acids and diamines listed above, the following, for example, are obtained: polyamide 4T (copolymer of 1,4-butanediamine and terephthalic acid), polyamide 6T (copolymer of 1,6-hexanediamine and terephthalic acid), polyamide MXD6 (copolymer of meta-xylylenediamine and adipic acid), polyamide 6I (copolymer of 1,6-hexanediamine and isophthalic acid), polyamide 6T/I (copolymer of 1,6-hexanediamine and terephthalic acid/isophthalic acid mixture), polyamide 9T (copolymer of 1,9-nonanediamine and terephthalic acid) and the like.

As semi-aromatic polyamide resin (C1), polyamide MXD6, polyamide 6T, polyamide 6T/I, polyamide 6I and polyamide 9T are preferred from the viewpoints of heat resistance and oxygen permeability.

### (1-5) Semi-Aromatic Polyamide-Alloy Resin

The main component of the outer coating material according to an embodiment of the present invention may be a semi-aromatic polyamide-alloy resin made of semi-aromatic polyamide resin (C1) and aliphatic polyamide resin (G).

Aliphatic polyamide resin (G) to be used for forming an alloy with semi-aromatic polyamide resin (C1) has excellent compatibility with semi-aromatic polyamide resin (C1). When aliphatic polyamide resin (G) is used for forming an alloy resin with semi-aromatic polyamide resin (C1) and the alloy resin is used for a coating layer of an optical fiber, proper flexibility is provided for the cable.

Known polyamides are used for aliphatic polyamide resin (G). Examples are polyamide 11, polyamide 12, polyamide 612, polyamide 1010, polyamide 6 and polyamide 66. Among those, polyamide 6 and polyamide 66 are preferred from the viewpoints of heat resistance and oxygen permeability.

When the above listed semi-aromatic polyamide-alloy resin is used as the main component of the outer coating material, it indicates that the content of the semi-aromatic polyamide-alloy resin in the outer coating material is 50 mass% or greater. The content is preferred to be 55 mass% or greater, more preferably 60 mass% or greater, and even more preferably 70 mass% or greater.

The ratio for mixing semi-aromatic polyamide resin (C1) and aliphatic polyamide resin (G) is not limited specifically as long as long-term heat resistance is achieved. For example, based on 100 parts by mass of semi-aromatic polyamide resin (C1), no greater than 300 parts by mass of aliphatic polyamide resin (G) may be mixed in; the mixed-in amount is preferred to be 5∼300 parts by mass, more preferably 10∼200 parts by mass, even more preferably 30∼100 parts by mass. Namely, semi-aromatic polyamide resin (C1) and aliphatic polyamide resin (G) are preferred to be mixed at a ratio (G/C1) in a range of 5/100∼300/100, more preferably 10/100∼200/100, even more preferably 30/100∼100/100.

When the mixing ratio of aliphatic polyamide resin (G) to 100 parts by mass of semi-aromatic polyamide resin (C1) is set at 5 parts by mass or greater, even higher long-term heat resistance and sufficient mechanical strength are provided for the polyamide-alloy resin. When the mixing ratio of aliphatic polyamide resin (G) to 100 parts by mass of semi-aromatic polyamide resin (C1) is set at 300 parts by mass or less, melt viscosity of the polyamide-alloy resin is lowered. Accordingly, when the material is coated on optical fiber, an optical fiber cable is obtained to exhibit proper flexibility.

When semi-aromatic polyamide resin (C1) and aliphatic polyamide resin (G) are mixed to form an alloy resin, the method is not limited specifically as long as both resins are mixed well or interdispersed homogeneously. For example, after both resins are simply blended, they are interdispersed by homogeneously melt-kneading, or an alloy resin is formed by using a compatibilizer capable of homogeneously interdispersing both resins. A compatibilizer is dispersed on the interface of a semi-aromatic polyamide resin and an aliphatic polyamide resin and lowers the interfacial tension of the resins. Accordingly, the resins are interdispersed well.

A compatibilizer is not limited to any specific type. For example, it is preferred to use those having polar reactive functional groups such as carboxyl groups, epoxy groups and amino groups. A compatibilizer having a polar reactive group is capable of forming a hydrogen bond between the amide groups of both resins so that both resins are interdispersed well.

Examples of a compatibilizer having a carboxyl group are unsaturated carboxylic acids such as maleic anhydride, maleic acid, fumaric acid, maleimide, maleic hydrazide, acrylic acid and methacrylic acid; esters, acidic amides and anhydrides of such unsaturated carboxylic acids; and the like.

Examples of a compatibilizer having an epoxy group are epichlorohydrin, 2-methyl epichlorohydrin, 2,2-bis(4-glycidyl phenyl ether)propane, epoxy resins and the like.

Examples of a compatibilizer having an amino group are aliphatic amine compounds such as hexamethylene diamine and tetramethylenediamine; aliphatic compounds such as dimethylaminoethyl (meth)acrylate, diethylaminoethyl (meth)acrylate, and dimethylaminopropyl (meth)acrylamide; aromatic compounds such as N,N-dimethylamino styrene; heterocyclic compounds such as morpholinoethyl (meth)acrylate, 4-vinyl pyridine, 2-vinyl pyridine, N-vinyl pyrrole, N-vinyl pyrrolidone and N-vinyl-thiopyrrolidone; and the like.

The amount of a compatibilizer to be used is not limited specifically as long as semi-aromatic polyamide resin (C1) and aliphatic polyamide resin (G) are interdispersed well. For example, the amount of a compatibilizer is 0.1∼20 mass%, preferably 1∼15 mass%, more preferably 2∼10 mass% of the total amount of semi-aromatic polyamide resin (C1) and aliphatic polyamide resin (G).

By setting the content of a compatibilizer at 0.5 mass% or greater, semi-aromatic polyamide resin (C1) and aliphatic polyamide resin (G) are interdispersed well, thus long-term heat resistance and sufficient mechanical strength are achieved. By setting the content of a compatibilizer at 20 mass% or less, a high degree of flexibility is achieved without reducing the heat resistance properties of a semi-aromatic polyamide-alloy resin.

The semi-aromatic polyamide resin (C1) and aliphatic polyamide resin (G) of the present invention may be individually produced, or any known or commercially available products may be used. The method for producing a semi-aromatic polyamide-alloy resin is not limited specifically, as long as semi-aromatic polyamide resin (C1) and aliphatic polyamide resin (G) are sufficiently interdispersed. For example, an alloy resin may be formed by melt-kneading semi-aromatic polyamide resin (C1) and aliphatic polyamide resin (G); after a compatibilizer is added to semi-aromatic polyamide resin (C1) and mixed well, aliphatic polyamide resin (G) may be added therein; after a compatibilizer is added to aliphatic polyamide resin (G) and mixed well, semi-aromatic polyamide resin (C1) may be added therein; or a compatibilizer may be added after semi-aromatic polyamide resin (C1) and aliphatic polyamide resin (G) are mixed.

As the outer coating material in an embodiment of the present invention, the following are used: material made of PPE resin (B) and PA resin (C) only (for example, material made only of a PPE-alloy resin as listed above); material made only of semi-aromatic polyamide resin (C1); and material made only of semi-aromatic polyamide resin (C1) and another resin (for example, material made only of semi-aromatic polyamide alloy resin listed above). In addition, to provide various properties, additives may also be added according to usage purposes.

### (1-6) Flame Retardant

A flame retardant is preferred to be added to the coating layer of optical fiber cables according to the embodiments of the present invention; adding to the outer coating layer is especially preferred. As for the type of a flame retardant, nitrogen-based flame retardants are preferred since they are highly interactive for setting PA resin to be flame retardant. Examples of nitrogen-based flame retardants are nitrogen compounds such as melamine compounds, triazine compounds, urea compounds, guanidine compounds and tetrazole compounds. A flame retardant made of at least one compound selected from the above is preferred.

Examples of melamine compounds are those having a melamine skeleton, for example, melamine; melamine derivatives such as melam, melem and melon, which are melamine condensates; cyanuric acids; melamine cyanurate, which is a salt of melamine and cyanuric acid; melamine sulfates; mixtures of melamine and melamine cyanurate; and the like.

Examples of triazine compounds are those having a triazine skeleton such as acetoguanamine, benzoguanamine, acrylic guanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, and 2-amino-4,6-dimercapto-1,3,5-triazine.

Examples of urea compounds are those having a urea skeleton and their salts, such as guanylurea phosphate.

Examples of guanidine compounds are those having a guanidine skeleton and their salts, such as guanidine sulfamates and guanidine phosphates.

Examples of tetrazole compounds are those having a tetrazole skeleton and metal salts or amine salts of tetrazole compounds. In particular, 5,5'-bi-1H-tetrazole·diammonium, 5,5'-bi-1H-tetrazole·piperazine, 5,5'-bi-1H-tetrazole·diguanidine, and barium, calcium, potassium, lithium, zinc or sodium salts of bistetrazole.

Those nitrogen compounds above may be used alone or in combination thereof.

Among the above nitrogen compounds, melamine compounds, triazine compounds and tetrazole compounds, especially melamine compounds, are preferred, since the dispersability of the flame retardant improves because of interaction with a polyamide resin. Among melamine compounds, even more preferred are melamine cyanurate, melamine sulfate, salts of melamine sulfate, mixtures of melamine and melamine cyanurate, since those nitrogen-based flame retardants generate inert gas when decomposed during combustion and enhance flame retardancy (self-extinguishing properties).

Commercially available melamine compounds may also be used: for example, STABIACE MC-2010N (brand name, made by Sakai Chemical Industry Co., Ltd.), MELAPUR MC25 (brand name, made by BASF), MELAPUR 200/70 (brand name, made by BASF), APINON-401 (brand name, made by Sanwa Chemical Co., Ltd.) and the like.

The content of a flame retardant such as a nitrogen compound is preferred to be 5∼50 mass%, more preferably 10∼40 mass%, even more preferably 20∼30 mass%, of the material for forming a coating layer (outer coating material, for example). By setting the content of a nitrogen compound at 5 mass% or greater, sufficient flame retardant properties are provided for the coating composition. The content of a nitrogen compound is set at 50 mass% or lower, because hardly any significant corresponding increase is observed in the effects if the content is further increased.

Furthermore, within a range that does not impair desired properties, a flame retardant promoter may be added to the coating material to enhance flame retardancy effects in an embodiment of the present invention. Flame retardant promoters are not limited to any specific type, but a phosphorus compound having excellent compatibility with PPE is preferred.

Examples of such a phosphorus compound are organic phosphorus compounds, for example, aromatic phosphoric esters such as triphenyl phosphate, tricresyl phosphate, trixylenyl phosphate, cresyl diphenyl phosphate and 2-ethylhexyl diphenyl phosphate; aromatic condensed phosphoric esters such as resorcinol bis-diphenyl phosphate, resorcinol bis-dixylenyl phosphate, and bisphenol A bis-diphenyl phosphate. Those phosphorus compounds may be used alone or in combination thereof. Among them, phosphoric esters, condensed phosphoric esters, phosphates, and condensed phosphates are preferred.

The content of a flame retardant promoter such as a phosphorus compound is not limited specifically. The content is preferred to be 0.1∼30 mass%, more preferably 3∼20 mass%, even more preferably 5∼15 mass%, of the material for forming a coating layer (such as outer coating material). By setting the content of a phosphorus compound at 0.1 mass% or greater, even higher flame retardant effects are provided for the coating layer. The content of a phosphorus compound is set at 30 mass% or lower, because hardly any significant corresponding increase is observed in the effects even if the content is further increased.

The total content of a flame retardant and a flame retardant promoter is preferred to be 5∼50 mass%, more preferably 7∼40 mass%, even more preferably 10∼30 mass%, of the material for forming a coating layer (such as outer coating material). By setting the total content of a flame retardant and a flame retardant promoter at 5 mass% or greater, flame retardancy properties are achieved to a degree that passes testing conducted in compliance with DIN 72551-5, the flame retardancy standards for electric wire and the like to be described later. The total content of a flame retardant and a flame retardant promoter is set at 50 mass% or lower, because hardly any significant corresponding increase is observed in the effects even if the content is further increased.

### (1-7) Antioxidant

The coating layer for the optical fiber cable according to an embodiment of the present invention may contain an antioxidant. The antioxidant is preferred to be added to outer coating material. By adding an antioxidant, deterioration of PA resin caused by thermal oxidation under high-temperature conditions is suppressed.

The type of an antioxidant is not limited specifically, and phenol-based, sulfur-based, phosphorus-based or amine-based antioxidants, for example, may be used. Among them, phenol-based and sulfur-based antioxidants are preferred, and at least one of them is preferred to be used.

A phenol-based antioxidant is not limited specifically, and hindered phenolic compounds, for example, may be used. Examples of hindered phenolic compounds are N,N'-(1,6-hexanediyl)bis[3,5-bis(1,1-dimethylethyl)-4-hydroxy-benzene propanamide], pentaerythritol tetrakis[3-[3,5-di(t-butyl)-4-hydroxyphenyl]propionate], 2,2-thio[diethylbis-3(3,5-di-t-butyl-4-hydroxyphenyl)propionate], 3-(3,5-di-t-butyl-4-hydroxyphenyl) propionic acid octadecyl, 4,4',4"-[(2,4,6-trimethyl benzene-1,3,5-triyl)tris(methylene)]tris(2,6-di-t-butylphenol), bis(3-t-butyl-4-hydroxy-5-methyl-benzenepropanoic acid)ethylenebis(oxyethylene), 1,3,5-tris(3,5-di-t-butyl-4-hydroxybenzyl)isocyanuric acid, 3,9-bis[2-[3-(3-t-butyl-4-hydroxy-S-methylphenyl)propionyloxy]-1,1-dimethyl-ethyl] -2,4,8,10-tetraoxaspiro(5,5)undecane, and the like.

Among those listed above, the following are preferred because they disperse well in PA resin: N,N'-(1,6-hexane-diyl)bis[3,5-bis(1,1-dimethylethyl)-4-hydroxy-benzene propanamide] (molecular weight: 636, for example, IRGANOX 1098 (brand name), made by BASF); pentaerythritol tetrakis[3-[3,5-di(t-butyl)-4-hydroxyphenyl] propionate] (molecular weight: 1176, for example, IRGANOX 1010 (brand name), made by BASF); and 3,9-bis[2-[3-(3-t-butyl-4-hydroxy-S-methylphenyl)propionyloxy]-1,1-dimethyl-ethyl] -2,4,8,10-tetraoxaspiro(5,5)undecane (molecular weight: 741, for example, ADK STAB AO-80 (brand name), made by ADEKA Corporation).

The content of a phenol-based antioxidant to be added is preferred to be 0.01∼5 mass%, more preferably 0.5∼3 mass%, even more preferably 0.1∼1 mass%, of the material for forming the coating layer (such as outer coating material). By setting the content at 0.01 mass% or higher, even better long-term heat resistance is provided. Setting the content at 5 mass% or lower suppresses a decrease in the mechanical strength of the coating layer in an embodiment of the present invention.

Examples of a sulfur-based antioxidant are thioether compounds where propionic acid ester is bonded to a divalent sulfur. Examples of such a compound are dilauryl-3,3'-thiodipropionate, dimyristyl-3,3'-thiodipropionate, distearyl-3,3'-thiodipropionate, 4,6-bis(octylthiomethyl)-o-cresol and the like. Among the above, dimyristyl-3,3'-thiodipropionate (molecular weight: 571, for example, DMTP Yoshitomi (brand name), made by API Corporation); distearyl-3,3'-thiodipropionate (molecular weight: 683, for example, DSTP Yoshitomi (brand name), made by API Corporation); and the like are preferred.

The content of a sulfur-based antioxidant to be added is preferred to be 0.01∼15 mass%, more preferably 0.5∼10 mass%, even more preferably 0.1∼3 mass%, of the material for forming a coating layer (outer coating material, for example). By setting the content at 0.01 mass% or higher, even better long-term heat resistance is provided. Setting the content at 15 mass% or lower suppresses a decrease in the mechanical strength of the coating material in an embodiment of the present invention.

Examples of a phosphorus-based antioxidant are tris-nonylphenyl phosphate, tris(2,4-di-t-butylphenyl)phosphate, distearyl pentaerythritol diphosphate, bis(2,4-di-t-butylphenyl)pentaerythritol phosphate, bis(2,6-di-t-butyl-4-methylphenyl)pentaerythritol phosphate, 2,2-methylenebis(4,6-di-t-butylphenyl)octyl phosphate, tetrakis(2,4-di-t-butylphenyl)-4,4'-biphenylene-diphosphate, and the like.

Examples of an amine-based antioxidant are N,N'-diphenyl-p-phenylenediamine, N-cyclohexyl-N'-phenyl-p-phenylene diamine, P-isopropoxy diphenylamine, N-phenyl-2-naphthylamine, N,N,N',N'-tetramethyl-p-phenylenediamine, N,N,N',N'-tetramethyl-p,p'-diaminodiphenylmethane, N,N-dimethyl-2-naphthylamine, N,N'-diphenyl quinone diimine, and the like.

Among those listed above, it is preferred to add a compound with a molecular weight of 500 or greater. Using a compound with a molecular weight of 500 or greater, problems, for example, the antioxidant itself bleeding out onto the surface of an optical fiber cable or migrating into the optical fiber during long-term use, are prevented, thus suppressing a decrease in the mechanical and optical characteristics of the optical fiber.

In an embodiment of the present invention, an antioxidant may be used alone, or two or more types of antioxidants may be used together. Two or more antioxidants are preferred to be used together to achieve synergistic effects. Especially, it is preferred for a phenol-based antioxidant and a sulfur-based antioxidant to be used together.

The combined effects of using a phenol-based antioxidant and a sulfur-based antioxidant together are as follows. Deterioration of PA resin progresses under high temperature conditions, because radicals generated when PA resin is decomposed are bonded with oxygen atoms in the air to form peroxide radicals (ROO·) ("R" indicates an alkyl group). A phenol-based antioxidant is capable of capturing the generated peroxide radicals and converting them into hydroxyperoxides (ROOH). Furthermore, a sulfur-based antioxidant is capable of decomposing hydroxyperoxides and converting them into stable alcohol components. Accordingly, synergistic effects of two types of antioxidants are obtained.

When a phenol-based antioxidant and a sulfur-based antioxidant are both used, the total amount to be added is preferred to be 0.01∼10 mass%, more preferably 0.05∼7 mass%, even more preferably 0.1∼5 mass%, of the material for forming a coating layer (outer coating material, for example). By setting the total content of a phenol-based antioxidant and a sulfur-based antioxidant at 0.01 mass% or greater, thermal stability is further enhanced. By setting the total content of a phenol-based antioxidant and a sulfur-based antioxidant at 10 mass% or less, a decrease in the mechanical strength of the optical fiber cable is suppressed. In addition, a phenol-based antioxidant and a sulfur-based antioxidant are not limited to being mixed at any specific ratio; for example, an approximate ratio of 1:1∼1:3 is preferred.

### (1-8) Other Additives

In the embodiments of the present invention, to enhance the identification or design features, pigments may be added to the material for forming a coating layer (for example, inner coating material, outer coating material) within a range that does not impair the properties of the optical fiber. The type of pigment is not limited specifically, and any inorganic or organic pigment may be used.

Examples of pigments are white pigments such as titanium dioxide and zinc oxide; yellow pigments such as azo organic pigment, lead yellow, chrome yellow, and zinc yellow; blue pigments such as ultramarine (ultramarine blue) and cobalt blue; green pigments such as chromium oxide; and the like.

The content of a pigment in the coating layer is not limited specifically, but it is preferred to be 0.5∼10 mass%, more preferably 1∼7 mass%, even more preferably 3∼5 mass%, of the material for forming a coating layer (for example, inner coating material, outer coating material).

By setting the content of a pigment at 0.5 mass% or greater, sufficient coloring effects are achieved, and by setting the content of a pigment at 10 mass% or less, the mechanical strength of the optical fiber cable is prevented from decreasing, while the optical properties are also prevented from experiencing a decrease caused by pigment migration into the optical fiber.

### (2) Optical Fiber Cable

By providing the aforementioned coating layer (inner coating layer and outer coating layer) on the periphery of the optical fiber, optical fiber cables having long-term heat resistance, sufficient mechanical characteristics and the like are obtained.

### (2-1) Optical Fiber

The type of optical fiber to be used in the optical fiber cable of an embodiment of the present invention is not limited specifically. For example, glass optical fibers may be used, or plastic optical fibers (POFs) may also be used.

The type of glass optical fiber is not limited specifically. For example, any known optical fibers such as follows may be used: quartz glass fiber, where the core and cladding are both made of quartz glass; and polymer-clad silica fiber (PCS), where the core is made of quartz glass and the cladding is made of fluorocarbon resin.

The type of POF is not limited specifically. Any known or newly developed POFs may be used. POFs are preferred to be used in the optical fiber cables according to the embodiments of the present invention. When optical fiber cables are used in mobile bodies such as automobiles, using POFs is preferred considering the ease of handling.

Examples of a POF are a GI type POF, where the refractive index of the core is continuously lowered from the center toward the periphery; a multilayer POF, where the refractive index of the core is intermittently lowered from the center toward the periphery; a multi-core POF, where multiple cores are surrounded by cladding to be integrated; and the like. Among those, multilayer POFs are preferred, because such POFs are set to have a broader bandwidth and are capable of performing high-speed signal transmission.

The material for a core is not limited specifically, and may be selected properly according to usage purposes. For example, highly transparent polymers are preferred.

A highly transparent polymer to form a core is preferred to contain methacrylate units. Examples are methyl methacrylate homopolymers, copolymers containing methyl methacrylate units as their main constitutional unit, and polymers containing fluorinated alkyl methacrylate units as their main constitutional unit. Among them, methyl methacrylate homopolymers and copolymers containing methyl methacrylate units as their main constitutional unit are preferred. As for copolymers, they are preferred to contain methyl methacrylate units at 50 mass% or greater, more preferably 60 mass% or greater, even more preferably 70 mass% or greater. Methyl methacrylate homopolymers are especially preferred because they have excellent heat resistance and transparency properties.

Cladding formed around the outer periphery of a core may be single-layered or multilayered with two or more layers. The sheath material for POF cladding is selected from those having a lower refractive index than that of the core material.

When a methyl methacrylate (MMA) copolymer is used as a core material, preferred examples of the sheath material are fluorine polymers such as vinylidene fluoride polymers, perfluoroalkyl methacrylate polymers, methacrylate polymers, copolymers of a perfluoroalkyl methacrylate compound and a (meth)acrylate compound, and the like.

Examples of vinylidene fluoride polymers are polyvinylidene fluorides and copolymers containing vinylidene fluoride units; for example, vinylidene fluoride-tetrafluoroethylene copolymers, vinylidene fluoride-hexafluoropropylene copolymers, vinylidene fluoride-hexafluoroacetone copolymers, vinylidene fluoride-tetrafluoroethylene-hexafluoropropylene copolymers, vinylidene fluoride-trifluoroethylene copolymers, other ternary or higher-order copolymers containing vinylidene fluoride units, and the like.

POFs are manufactured by conventional methods such as a melt spinning method. For manufacturing optical fiber cables to be used under conditions of a wide temperature range, it is preferred to conduct continuous or batch annealing treatments to suppress pistoning.

The diameter of a POF in the embodiments of the present invention is preferred to be 500 µm∼1200 µm, more preferably 700 µm∼1100 µm, even more preferably 750 µm∼1000 µm, when transmission characteristics and ease of handling are considered.

The thickness of POF cladding is preferred to be 3∼30 µm, more preferably 4∼20 µm, even more preferably 5∼15 µm, to achieve total reflection of the light propagating through the core. When the thickness of the cladding is set at 3 µm or greater, it is easier to achieve total reflection of light in the core. By setting the thickness of the cladding at 30 µm or less, a decrease in the amount of light that propagates through the POF is prevented. Moreover, even if the thickness is further increased, hardly any significant improvement is observed in the effects on the propagation of light.

### (2-2) Optical Fiber Cable

In an optical fiber cable according to an embodiment of the present invention, the coating layer provided around the periphery of optical fiber includes an inner coating layer formed on the inner side and an outer coating layer formed on the outer side. The coating layer may be double-layered, made of those coating layers, or may have another layer made of different material. The other layer may be provided on the inner side of the inner coating layer (on the optical fiber side), on the outer side of the outer coating layer (the side further from the optical coating layer), or between the inner and outer coating layers.

Among the various structures above, the structure of optical fiber cables according to the embodiments of the present invention is preferred to have an inner coating layer provided on the outer periphery of the optical fiber, and an outer coating layer provided on the outer periphery of the inner coating layer. Depending on the material of the inner and outer coating layers, not only sufficient mechanical strength but also long-term heat resistance is achieved.

### (2-2-1) Inner Coating Layer

The inner coating layer according to an embodiment of the present invention is preferred to contain polyamide PA resin (A) as its main component. Here, its main component indicates that the content of PA resin (A) in the inner coating material is 50 mass% or greater; the content is preferred to be 55 mass% or greater, more preferably 60 mass% or greater, even more preferably 70 mass% or greater.

PA resin (A) is excellent because its melting point is relatively low and it is easier to coat (excellent processability). In addition, when a POF containing a vinylidene fluoride resin in the cladding is used for the optical fiber, the amide bond in the PA resin of the inner coating layer interacts with the C-F bond in the vinylidene fluoride resin of the cladding, thereby enhancing the adhesiveness of the cladding and the inner coating layer.

Preferred examples of PA resin (A) are homopolymers such as polyamide 11, polyamide 12, polyamide 612 and polyamide 1010; polyamide copolymers in combination of monomer units of those homopolymers; polyamide elastomers with a flexible segment introduced to those polymers; and mixtures of polyamide elastomers and other polyamide resins.

Among the polymers above, homopolymers such as polyamide 11, polyamide 12 and polyamide 1010 are preferred since they exhibit excellent heat resistance, bend resistance, chemical resistance and the like. Since homopolymers such as polyamide 11, polyamide 12 and polyamide 1010 are easy to mold during coating procedures and have a proper melting point, it is easier to coat a POF without reducing the transmission capability of the POF that has core material made of a homopolymer of polymethyl methacrylate or a copolymer containing methyl methacrylate as its main component.

Those resins also exhibit excellent dimensional stability. Thus, when those resins are used for the inner coating layer, thermal contraction and pistoning are effectively prevented so as not to cause problems, especially when optical fiber cables are used for in-vehicle LAN systems.

In addition, battery acid resistance is required when optical fiber cables are used for in-vehicle communication systems. Among polyamide resins, homopolymers such as polyamide 11, polyamide 12 and polyamide 1010 are preferred since they exhibit excellent battery acid resistance.

Additives, for example, black pigments such as carbon black, may be added for the inner coating layer to provide proper properties so that light leaking from the optical fiber to the coating layer and incident light entering the optical fiber are prevented.

The content of an additive is not limited specifically, and the content is preferred to be 0.15∼5 mass%, more preferably 0.2∼2.5 mass%, even more preferably 0.3∼1.5 mass%, of the inner coating material. By setting the content at 0.15 mass% or greater, the effect of preventing incident light from entering the optical fiber is improved, thereby enhancing transmission stability, which is the originally intended purpose of the optical fiber. By setting the content of the additive at 5 mass% or less, even when the optical fiber is bent when installed, light leakage from the bent portion is suppressed.

### (2-2-2) Outer Coating Layer

For optical fiber cables according to the embodiments of the present invention, an outer coating layer made of the aforementioned outer coating material is preferred to be provided on the outer periphery of the inner coating layer. Optical fiber cables having such a structure will exhibit excellent long-term heat resistance.

A coating layer on the periphery of an optical fiber is formed by, for example, known methods such as extrusion coating conducted by using a known apparatus such as a crosshead-type coating apparatus equipped with an extruder.

When plastic transmission bodies such as POFs are coated with resin to form cables, if the melting temperature of the resin is too high, the POF itself may be easily fused. To coat a thermoplastic resin on a POF, the melting temperature of the coating resin is preferred to be 150°C to 230°C.

In the embodiments of the present invention, it is preferred to first form an inner coating layer on the outer periphery of an optical fiber, and then to form an outer coating layer over the inner layer.

After the inner coating layer is formed, an outer coating layer is formed by a batch-type method. By so doing, thermal impact on the optical fiber is reduced by the inner coating layer during the process of coating a high-temperature resin material. Accordingly, even if the melting temperature of the coating material is high, the outer coating material is formed without causing damage to optical properties of the optical fiber.

Conventionally, resins such as PPE alloy resins having a melting temperature of 250°C or higher were thought to be hard or impossible to use for coating on a POF. However, according to the embodiments of the present invention, after an inner coating layer is formed using PA resin (A), an outer coating layer is formed using a high-temperature resin material. As a result, the aforementioned problem was solved.

When the outer diameter of an optical fiber cable in the embodiment of the present invention is set at a generally used size of 2.2 mm, for example, and when the outer diameter of a POF is set at 1.0 mm, the same as that of a generic POF, then the total thickness of a coating layer is set at 0.6 mm.

When a coating layer is multilayered, the inner coating layer and outer coating layer are preferred to have a thickness ratio in a range of 50:50 (for example, 300 µm: the inner coating layer, 300 µm: the outer coating layer) to 10:90 (for example, 60 µm: the inner coating layer, 540 µm: the outer coating layer); more preferably in a range of 40:60 (for example, 240 µm: the inner coating layer, 360 µm: the outer coating layer) to 15:85 (for example, 90 µm: the inner coating layer, 510 µm: the outer coating layer); even more preferably in a range of 30:70 (for example, 180 µm: the inner coating layer, 420 µm: the outer coating layer) to 20:80 (for example, 120 µm: the inner coating layer, 480 µm: the outer coating layer). By setting the inner coating layer and outer coating layer to have such a thickness ratio, desired heat resistance and flame retardancy effects are achieved.

Since optical fiber cables according to the embodiments of the present invention exhibit long-term heat resistance and excellent mechanical strength, they are especially suitable when used in mobile bodies such as automobiles, ships and railways which could be exposed to a high-temperature environment.

### EXAMPLES

In the following, preferred embodiments of the present invention are further described with reference to examples.

Evaluation methods conducted on optical fiber cables in the examples are as follows.

### [Transmission Loss]

A 25 m-5 m cutback technique was employed to determine transmission loss (dB/km): a wavelength of light to be measured: 650 nm; and the NA (numerical aperture) of incident light: 0.1.

### [Long-term Heat Resistance Test]

First long-term heat resistance test (condition A) was conducted under conditions of temperature at 105°C and relative humidity at 10% or lower to measure transmission loss after 5000 hours.

Second long-term heat resistance test (condition B) was conducted under hot, wet conditions of temperature at 85°C and relative humidity at 85% to measure transmission loss after 3000 hours.

### [Flame Test]

A flame retardancy test was conducted in compliance with DIN 72551-5. In the test, DIN 72551-5, which is specified for measuring the flame retardancy of electric wires, was slightly modified as follows to measure the flame retardancy of optical fiber cables.

Namely, to measure the flame retardancy of electrical wires, it is required to maintain wires diagonally at 45 degrees during and after the fire test. However, unlike electric wires, optical fiber cables are hard to maintain diagonally at 45 degrees when burnt. Therefore, for the purpose of measuring the flame retardancy of an optical fiber cable, a pair of copper wires were wound helically to cross each other on the outer peripheral surface of the optical fiber cable so that the optical fiber cable is kept diagonally at 45 degrees during combustion. Copper wires with a diameter of 0.7 mm were helically wound at a cycle of 20 mm in a longitudinal direction of an optical fiber cable. The following was done to determine whether or not an optical fiber cable has passed the flame retardancy test: a burner flame was applied on an optical fiber cable for 10 seconds to ignite the cable, and then the flame was moved away from the cable; if the flame goes out within 30 seconds, it is determined that the cable has passed the test; and if the flame does not go out within 30 seconds, it is determined that the cable has failed the test. The above procedure was conducted on each of 10 sample cables. Out of 10 tests, the number with a passing result is shown as the test results in Table 1.

### [Mechanical Characteristics Test]

### (1) Hydrolysis Test

An optical fiber cable, which had been kept for 1000 hours under hot, wet conditions of temperature at 85°C and humidity at 95%, was wound tightly around a metal rod with a diameter of 10 mm. Then, signs of deterioration such as chipping and cracking of the cable after 24 hours was observed visually. When there was no chipping observed on the surface of the coating layer, the result was denoted as "○"; if chipping was observed, the result was denoted as "X".

### [Impact Resistance Test]

Testing was conducted in compliance with JIS C6861 as follows. A sample was laid on a flat copper plate, and a 1-kg weight was dropped from a predetermined height to exert impact on the sample and the copper plate. The potential energy of the weight was determined. The procedure was repeated until the transmission loss was increased 1 dB from the initial value. The potential energy at that time was shown as the test result (impact resistance).

### (Example 1)

The following POF was used as optical fiber.

### Core: PMMA

First cladding (cladding positioned on the outer periphery of the core): copolymer of 2,2,2-trifluoroethyl methacrylate (3FM) / 2-(perfluorooctyl)ethyl methacrylate (17FM) / methyl methacrylate / methacrylic acid (51/31/17/1 (mass ratio)); and
Second cladding (second cladding positioned on the outer periphery of first cladding): copolymer of vinylidene fluoride / tetrafluoroethylene / hexafluoropropylene (refractive index 1.374).

An optical fiber cable was formed by coating the above POF as follows.

First, using a crosshead-type coating machine, polyamide resin was coated around the periphery of the POF to form an inner coating layer with a thickness of 260 µm, and a cable with an outer diameter of 1.52 mm was obtained. For the polyamide resin, polyamide 12 (brand name: DAIAMID L1640, made by Daicel-Evonik, Ltd.) was used and the temperature of the crosshead die of the crosshead-type coating machine was set at 220°C.

Next, around the outer periphery of the obtained cable, an outer coating material was coated using the crosshead cable coating machine to form a 390-µm thick outer coating layer. Accordingly, a double-layered optical fiber cable having an outer diameter of 2.3 mm was obtained.

As the outer coating material, a composition was prepared by mixing 100 parts by mass of an alloy resin of polyamide 66 and poly(2,6-dimethyl-1,4-phenylene)ether (brand name: NORYL GTX951, made by SABIC) and 30 parts by mass of a nitrogen-based flame retardant (brand name: Melamine Cyanurate MC6000, made by Nissan Chemical Industries, Ltd.)

When flame retardancy testing was conducted on 10 samples of the optical fiber cable, nine samples passed the test, showing excellent flame retardancy. Also, when long-term heat resistance testing was conducted, transmission loss was low in conditions A and B and excellent long-term heat resistance was confirmed (Table 1).

### (Example 2)

An optical fiber cable was formed the same as in Example 1 except for the following: the resin of the outer coating material was replaced with an alloy resin of polyamide 6 and poly(2,6-dimethyl-1,4-phenylene)ether (brand name: NORYL GTX600, made by SABIC); and, based on 100 parts by mass of the alloy resin, mixed in were 30 parts by mass of a nitrogen-based flame retardant (brand name: Melamine Cyanurate MC6000, made by Nissan Chemical), 1 part by mass of a hindered phenol-based antioxidant (brand name: ADK STAB AO-80, made by ADEKA Corp.), and 3 parts by mass of a sulfur-based antioxidant (brand name: DSTP Yoshitomi, made by API Corp.). The test results of the optical fiber cable are shown in Table 1.

### (Examples 3∼7)

Optical fiber cables were each formed the same as in Example 1 except that types of a resin, flame retardant, hindered phenol-based antioxidant, and sulfur-based antioxidant as well as their mixing ratio for forming an outer coating layer were changed as shown in Table 1. The test results of each optical fiber cable are shown in Table 1.

### (Examples 8∼12)

Optical fiber cables were each formed the same as in Example 1 except that types of resin, flame retardant, hindered phenol-based antioxidant, sulfur-based antioxidant and pigment, as well as their mixing ratio for forming an outer coating layer, were changed as shown in Table 2. The test results of each optical fiber cable are shown in Table 2.

### (Comparative Example 1)

An optical fiber cable was formed the same as in Example 1 except for the following: the resin of the outer coating material was replaced with polyamide 6 (brand name: Unitika Nylon 6A1020BRL, made by Unitika Ltd.); and based on 100 parts by mass of the resin, mixed in were 30 parts by mass of a nitrogen-based flame retardant (brand name: Melamine Cyanurate MC6000, made by Nissan Chemical), and 3 parts by mass of a phenol-based antioxidant (brand name: ADK STAB AO-80, made by ADEKA Corp.) The test results of the optical fiber cable are shown in Table 1.

### (Comparative Examples 2∼5)

Optical fiber cables were each formed the same as in Example 1 except that the resin for inner coating material, the resin for outer coating material, flame retardant, hindered phenol-based antioxidant and sulfur-based antioxidant, as well as their mixing ratio, were changed as shown in Table 1. The test results of each optical fiber cable are shown in Table 1.

### (Comparative Examples 6 and 7)

Optical fiber cables were each formed the same as in Example 1 except that the resin for inner coating material, the resin for outer coating material, flame retardant, hindered phenol-based antioxidant, sulfur-based antioxidant and pigment, as well as their mixing ratio, were changed as shown in Table 2. The test results of each optical fiber cable are shown in Table 2.

**Table 1**

| | Inner Coating Layer | Outer Coating Layer | | | | | | | | Long-term Heat Resistance Test | | Flame Test | Mechanical Characteristics Test | |
|---|---|---|---|---|---|---|---|---|---|---|---|---|---|---|
| | Resin | Resin | | Flame Retardant | | Hindered Phenol-based Antioxidant | | Sulfur-based Antioxidant | | Condition A (dB/km) | Condition B (dB/km) | Number of Passing Times | Hydrolysis | Impact Resistance (N·m) |
| | type | type | content (parts by mass) | type | content (parts by mass) | type | content (parts by mass) | type | content (parts by mass) | | | | | |
| Example 1 | (A-1) | (BC-1) | 100 | (D-1) | 30 | - | - | - | - | 180 | 155 | 9 | ○ | 6 |
| Example 2 | (A-1) | (BC-3) | 100 | (D-1) | 30 | (E-1) | 1 | (E-4) | 3 | 242 | 177 | 9 | ○ | 6 |
| Example 3 | (A-1) | (BC-2) | 100 | (D-1) | 30 | - | - | - | - | 205 | 168 | 9 | ○ | 6 |
| Example 4 | (A-1) | (BC-1) | 100 | (D-1) | 30 | (E-1) | 1 | (E-4) | 3 | 191 | 171 | 10 | ○ | 6 |
| Example 5 | (A-1) | (BC-1) | 100 | (D-1) | 30 | (E-2) | 1 | (E-4) | 3 | 189 | 166 | 10 | ○ | 6 |
| Example 6 | (A-1) | (BC-1) | 100 | (D-1) | 30 | (E-3) | 1 | (E-4) | 3 | 201 | 182 | 9 | ○ | 6 |
| Example 7 | (A-1) | (BC-2) | 100 | (D-1) | 30 | (E-1) | 1 | (E-4) | 3 | 179 | 173 | 10 | ○ | 6 |
| Comparative Example 1 | (A-1) | (A-2) | 100 | (D-1) | 30 | (E-1) | 3 | - | - | 496 | 158 | 7 | x | 5 |
| Comparative Example 2 | (A-1) | (A-3) | 100 | (D-1) | 30 | - | - | - | - | 394 | 160 | 6 | x | 5 |
| Comparative Example 3 | (A-1) | (A-4) | 100 | (D-1) | 30 | (E-1) | | (E-4) | 3 | 372 | 153 | 7 | ○ | 5 |
| Comparative Example 4 | (A-1) | (A-5) | 100 | (D-1) | 30 | - | - | - | - | 528 | 162 | 9 | ○ | 4 |
| Comparative Example 5 | (BC-3) | (BC-3) | 100 | (D-1) | 30 | (E-1) | 1 | (E-4) | 3 | 892 | 593 | 10 | ○ | 6 |

| | | | | | | | | | | | | | | |
|---|---|---|---|---|---|---|---|---|---|---|---|---|---|---|
| (A-1): polyamide 12 resin (brand name: DAIAMID L1640, made by Daicel-Evonik, Ltd.) (A-2): polyamide 6 resin (brand name: UBE NYLON 1011 B, made by UBE Industries, Ltd.) (A-3): polyamide 66 resin (brand name: Maranyl Nylon 66 A226, made by Unitika Ltd.) (A-4): polyamide 66 resin (brand name: LEONA 1300S, made by Asahi Kasei Chemicals Corp.) (A-5): polyamide 12 elastomer resin (brand name: GRILAMID XE 3833, made by EMS-Chemie AG) (BC-1): alloy resin of polyamide 66 resin and PPE resin (brand name: NORYL GTX951, made by SABIC) (BC-2): alloy resin of polyamide 66 resin and PPE resin (brand name: NORYL GTX9400W, made by SABIC) (BC-3): alloy resin of polyamide 6 resin and PPE resin (brand name: NORYL GTX600, made by SABIC) (D-1): melamine cyanurate (brand name: Melamine Cyanurate MC6000, made by Nissan Chemical) (E-1): hindered phenol-based antioxidant (brand name: ADK STAB AO-80, made by Adeka Corp.) (E-2): hindered phenol-based antioxidant (brand name: IRGANOX 1010, made by BASF) (E-3): hindered phenol-based antioxidant (brand name: IRGANOX 1098, made by BASF) (E-4): sulfur-based antioxidant (brand name: DSTP Yoshitomi, made by API Corp.) Condition A: exposure for 5000 hours at temperature of 105ºC and relative humidity of 10% or lower Condition B: exposure for 3000 hours at temperature of 85ºC and relative humidity of 85% | | | | | | | | | | | | | | |

**Table 2**

| | Inner Coating Layer | Outer Coating Layer | | | | | | | | | | Long-term Heat Resistance Test | | Flame Test |
|---|---|---|---|---|---|---|---|---|---|---|---|---|---|---|
| | Resin | Resin | | Flame Retardant | | Hindered Phenol-based Antioxidant | | Sulfur-based Antioxidant | | Pigment | | Condition A (dB/km) | Condition B (dB/km) | Number of Passing Times |
| | type | type | content (parts by mass) | type | content (parts by mass) | type | content (parts by mass) | type | content (parts by mass) | type | content (parts by mass) | | | |
| Example 8 | (A-1) | (C1-3) | 100 | (D-1) | 20 | (E-1) | 1.5 | (E-4) | 1.5 | (F-1) | 1 | 159 | 178 | 9 |
| Example 9 | (A-1) | (C1-1) | 100 | (D-1) | 20 | (E-1) | 1.5 | (E-4) | 1.5 | F-1) | 1 | 137 | 172 | 9 |
| Example 10 | (A-1) | (C1-6) | 100 | (D-2) | 20 | (E-3) | 1 | (E-4) | 1.5 | (F-1) | 1 | 196 | 164 | 10 |
| Example 11 | (A-1) | (C1-5) | 100 | (D-2) | 20 | (E-2) | 1 | (E-4) | 1.5 | (F-1) | 1 | 163 | 179 | 10 |
| Example 12 | (A-1) | (C1-4) | 100 | (D-1) | 20 | (E-2) | 1 | (E-4) | 1.5 | (F-1) | 1 | 187 | 182 | 9 |
| Comparative Example 6 | (A-1) | (A-2) | 100 | (D-1) | 20 | (E-1) | 3 | (E-4) | 1.5 | (F-1) | 1 | 614 | 192 | 9 |
| Comparative Example 7 | (A-1) | (A-3) | 100 | (D-1) | 30 | (E-1) | 1 | (E-4) | 1.5 | (F-1) | 1 | 552 | 179 | 9 |

| | | | | | | | | | | | | | | |
|---|---|---|---|---|---|---|---|---|---|---|---|---|---|---|
| (A-1): polyamide 12 resin (brand name: DAIAMID L1640, made by Daicel-Evonik, Ltd.) (A-2): polyamide 6 resin (brand name: UBE NYLON 1011 B, made by UBE Industries, Ltd.) (A-3): polyamide 66 resin (brand name: Maranyl Nylon 66 A226, made by Unitika Ltd.) (C1-1): polyamide MXD6 resin (brand name: NYLON-MXD6 S6001, made by Mitsubishi Gas Chemical Compar (C1-2): polyamide 9T resin (brand name: GENESTAR N1000A, made by Kuraray Co., Ltd.) (C1-3): alloy resin of (C1-1) and (A-4) (mass ratio of (C1-1): (A-4)=70:30) (C1-4): alloy resin of (C1-1) and (A-4) (mass ratio of (C1-1): (A-4)=60:40) (C1-5): alloy resin of (C1-1) and (A-2) (mass ratio of (C1-1): (A-2)=70:30) (C1-6): alloy resin of (C1-2) and (A-3) (mass ratio of (C1-2): (A-3)=70:30) (D-1): melamine cyanurate (brand name: Melamine Cyanurate MC6000, made by Nissan Chemical Industries, Ltd.) (D-2): brominated polystyrene (brand name: HP-3010, made by Albemarle Japan Corp.: content of brominate atoms at 68.5 mass%) (E-1): hindered phenol-based antioxidant (brand name: ADK STAB AO-80, made by Adeka Corp.) (E-2): hindered phenol-based antioxidant (brand name: IRGANOX 1010, made by BASF) (E-3): hindered phenol-based antioxidant (brand name: IRGANOX 1098, made by BASF) (E-4): sulfur-based antioxidant (brand name: DSTP Yoshitomi, made by API Corp.) (F-1): ultramarine pigment (brand name: enhanced ultramarine AP-205, made by Daiichi Kasei Co., Ltd.) Condition A: exposure for 5000 hours at temperature of 105ºC and relative humidity of 10% or lower Condition B: exposure for 3000 hours at temperature of 85ºC and relative humidity of 85% | | | | | | | | | | | | | | |

Abbreviations denoted in Tables 1 and 2 indicate as follows.
(A-1): polyamide 12 resin (brand name: DAIAMID L1640, made by Daicel-Evonik, Ltd.)
(A-2): polyamide 6 resin (brand name: UBE NYLON 1011B, made by UBE Industries, Ltd.)
(A-3): polyamide 66 resin (brand name: Maranyl Nylon 66 A226, made by Unitika Ltd.)
(A-4): polyamide 66 resin (brand name: LEONA 1300S, made by Asahi Kasei Chemicals Corporation)
(A-5): polyamide 12 elastomer resin (brand name: GRILAMID XE 3833, made by EMS-Chemie AG)
(BC-1): alloy resin of polyamide 66 resin and PPE resin (poly(2,6-dimetheyl-1,4-phenylene)ether) (brand name: NORYL GTX951, made by SABIC), the total content of polyamide 66 resin and PPE resin in the alloy resin is 70 mass% or greater
(BC-2): alloy resin of polyamide 66 resin and PPE resin (poly(2,6-dimetheyl-1,4-phenylene)ether) (brand name: NORYL GTX9400W, made by SABIC), the total content of polyamide 66 resin and PPE resin in the alloy resin is 70 mass% or greater
(BC-3): alloy resin of polyamide 6 resin and PPE resin (poly(2,6-dimetheyl-1,4-phenylene)ether) (brand name: NORYL GTX600, made by SABIC), the total content of polyamide 6 resin and PPE resin in the alloy resin is 70 mass% or greater
(C1-1): polyamide MXD6 resin (brand name: NYLON-MXD6 S6001, made by Mitsubishi Gas Chemical Company, Inc.)
(C1-2): polyamide 9T resin (brand name: GENESTAR N1000A, made by Kuraray Co., Ltd.)
(C1-3): alloy resin of (C1-1) and (A-4) (mass ratio of (C1-1): (A-4)=70:30)
(C1-4): alloy resin of (C1-1) and (A-4) (mass ratio of (C1-1): (A-4)=60:40)
(C1-5): alloy resin of (C1-1) and (A-2) (mass ratio of (C1-1): (A-2)=70:30)
(C1-6): alloy resin of (C1-2) and (A-3) (mass ratio of (C1-2): (A-3)=70:30)
(D-1): melamine cyanurate (brand name: Melamine Cyanurate MC6000, made by Nissan Chemical)
(D-2): brominated polystyrene (brand name: HP-3010, made by Albemarle Japan Corporation, the content of brominate atoms at 68.5 mass%)
(E-1): hindered phenol-based antioxidant (brand name: ADK STAB AO-80, made by ADEKA Corp.)
(E-2): hindered phenol-based antioxidant (brand name: IRGANOX 1010, made by BASF)
(E-3): hindered phenol-based antioxidant (brand name: IRGANOX 1098, made by BASF)
(E-4): sulfur-based antioxidant (brand name: DSTP Yoshitomi, made by API Corp.)
(F-1): ultramarine pigment (brand name: enhanced ultramarine AP-205, made by Daiichi Kasei Co., Ltd.
Condition A: exposure for 5000 hours at temperature of 105°C and relative humidity of 10% or lower
Condition B: exposure for 3000 hours at temperature of 85°C and relative humidity of 85%

As shown in Table 1, optical fiber cables of Examples 1∼7, prepared by using PA resin for the inner coating material and an alloy resin of PA resin and PPE resin for the outer coating material, showed excellent long-term heat resistance and flame retardancy. Also, they exhibited sufficient impact resistance and hydrolysis resistance.

By contrast, optical fiber cables of Comparative Examples 1∼4, prepared without using an alloy resin of PA resin and PPE resin for the coating material of optical fiber cables, showed low results in long-term heat resistance (condition A). In addition, the coating layers of optical fiber cables in Comparative Examples 1 and 2 showed deterioration in hydrolysis testing, resulting in chipping and cracking. Also, the optical fiber cable of Comparative Example 5 prepared by using alloy resin for both inner and outer coating layers showed low results in long-term heat resistance (condition A and B), and the optical fiber cables of Comparative Examples 1∼3 showed low results in flame retardancy.

As shown in Table 2, optical fiber cables of Examples 8∼12, prepared by using PA resin for the inner coating material and semi-aromatic polyamide resin (or alloy resin of semi-aromatic polyamide resin and polyamide resin) for the outer coating material, showed excellent long-term heat resistance and flame resistance.

By contrast, as shown in Table 2, optical fiber cables of Comparative Examples 6 and 7, prepared without using semi-aromatic polyamide resin for the coating material of optical fiber cables, showed low results in long-term heat resistance (condition A).

## Claims

1. An optical fiber cable, comprising:
an optical fiber; and
a coating layer provided on the outer periphery of the optical fiber and comprising at least an inner coating layer and an outer coating layer,
wherein the material for forming an inner coating layer contains polyamide resin (A),
the material for forming an outer coating layer contains polyamide resin (C), and
the material for forming the outer coating layer contains at least either polyphenylene ether resin (B) or semi-aromatic polyamide resin (C1),
wherein, if the material for forming the outer coating layer contains polyphenylene ether resin (B), the polyamide resin (C) is made of at least one resin selected from polyamide 6, polyamide 66 and polyamide MXD6.

2. The optical fiber cable according to Claim 1, wherein the total content of polyphenylene ether resin (B) and polyamide resin (C) is set at 50 mass% or greater of the material for forming the outer coating layer.

3. The optical fiber cable according to Claim 1 or 2, wherein polyphenylene ether resin (B) and polyamide resin (C) in the material for forming the outer coating layer are set to have a mass ratio (C/B) in a range of 10/100 to 300/100.

4. The optical fiber cable according to Claim 1, wherein the material for forming the outer coating layer comprises semi-aromatic polyamide resin (C1).

5. The optical fiber cable according to Claim 4, wherein the content of semi-aromatic polyamide resin (C1) in the material for forming the outer coating layer is set at 50 mass% or greater.

6. The optical fiber cable according to Claim 4 or 5, wherein semi-aromatic polyamide resin (C1) is made of at least a resin selected from polyamide MXD6, polyamide 6T, polyamide 6I, polyamide 6T/I, and polyamide 9T.

7. The optical fiber cable according to any of Claims 4 to 6, wherein semi-aromatic polyamide resin (C1) is a polyamide resin having a meta-position-substituted benzene ring.

8. The optical fiber cable according to any of Claims 1 to 7, wherein polyamide resin (A) is made of at least a resin selected from polyamide 11, polyamide 12 and polyamide 1010.

9. The optical fiber cable according to any of Claims 1 to 8, wherein the content of polyamide resin (A) in the material for forming the inner coating layer is set at 50 mass% or greater.

10. The optical fiber cable according to any of Claims 1 to 9, wherein the material for forming the outer coating layer further comprises flame retardant (D).

11. The optical fiber cable according to Claim 10, wherein flame retardant (D) is a nitrogen compound.

12. The optical fiber cable according to any of Claims 1 to 11, wherein the material for forming the outer coating layer further comprises antioxidant (E).

13. The optical fiber cable according to Claim 12, wherein antioxidant (E) is made of at least either a hindered phenol-based antioxidant or sulfur-based antioxidant.

14. A mobile body comprising an optical fiber cable according to any of Claims 1 to 13.

## Patentansprüche

1. Lichtwellenleiterkabel, das umfasst:
einen Lichtwellenleiter; und
eine Überzugsschicht, die auf der äußeren Begrenzungsfläche des Lichtwellenleiters bereitgestellt ist und zumindest eine innere Überzugsschicht und eine äußere Überzugsschicht umfasst,
wobei das Material zum Bilden einer inneren Überzugsschicht Polyamidharz (A) enthält,
das Material zum Bilden einer äußeren Überzugsschicht Polyamidharz (C) enthält, und
das Material zum Bilden der äußeren Überzugsschicht zumindest entweder Polyphenylenetherharz (B) oder semi-aromatisches Polyamidharz (C1) enthält,
wobei, falls das Material zum Bilden der äußeren Überzugsschicht Polyphenylenetherharz (B) enthält, das Polyamidharz (C) aus zumindest einem Harz ausgewählt aus Polyamid 6, Polyamid 66 und Polyamid MXD6 hergestellt ist.

2. Lichtwellenleiterkabel nach Anspruch 1, wobei der Gesamtgehalt an Polyphenylenetherharz (B) und Polyamidharz (C) auf 50 Massen-% oder mehr des Materials zum Bilden der äußeren Überzugsschicht eingestellt ist.

3. Lichtwellenleiterkabel nach Anspruch 1 oder 2, wobei Polyphenylenetherharz (B) und Polyamidharz (C) in dem Material zum Bilden der äußeren Überzugsschicht eingestellt sind, um ein Massenverhältnis (C/B) in einem Bereich von 10/100 bis 300/100 aufzuweisen.

4. Lichtwellenleiterkabel nach Anspruch 1, wobei das Material zum Bilden der äußeren Überzugsschicht semi-aromatisches Polyamidharz (C1) umfasst.

5. Lichtwellenleiterkabel nach Anspruch 4, wobei der Gehalt an semiaromatischem Polyamidharz (C1) in dem Material zum Bilden der äußeren Überzugsschicht bei 50 Massen-% oder mehr eingestellt ist.

6. Lichtwellenleiterkabel nach Anspruch 4 oder 5, wobei semiaromatisches Polyamidharz (C1) aus zumindest einem Harz ausgewählt aus Polyamid MXD6, Polyamid 6T, Polyamid 6I, Polyamid 6T/I und Polyamid 9T hergestellt ist.

7. Lichtwellenleiterkabel nach einem der Ansprüche 4 bis 6, wobei semiaromatisches Polyamidharz (C1) ein Polyamidharz mit einem meta-Positions-substituierten Benzolring ist.

8. Lichtwellenleiterkabel nach einem der Ansprüche 1 bis 7, wobei Polyamidharz (A) aus zumindest einem Harz ausgewählt aus Polyamid 11, Polyamid 12 und Polyamid 1010 hergestellt ist.

9. Lichtwellenleiterkabel nach einem der Ansprüche 1 bis 8, wobei der Gehalt an Polyamidharz (A) in dem Material zum Bilden der inneren Überzugsschicht auf 50 Massen-% oder mehr eingestellt ist.

10. Lichtwellenleiterkabel nach einem der Ansprüche 1 bis 9, wobei das Material zum Bilden der äußeren Überzugsschicht ferner ein Flammschutzmittel (D) umfasst.

11. Lichtwellenleiterkabel nach Anspruch 10, wobei das Flammschutzmittel (D) eine Stickstoffverbindung ist.

12. Lichtwellenleiterkabel nach einem der Ansprüche 1 bis 11, wobei das Material zum Bilden der äußeren Überzugsschicht ferner ein Antioxidans (E) umfasst.

13. Lichtwellenleiterkabel nach Anspruch 12, wobei das Antioxidans (E) aus zumindest entweder einem sterisch gehinderten Phenol-basierten Antioxidans oder einem Schwefel-basierten Antioxidans hergestellt ist.

14. Beweglicher Körper, der ein Lichtwellenleiterkabel nach einem der Ansprüche 1 bis 13 umfasst.

## Revendications

1. Câble en fibre optique, comprenant :
une fibre optique ; et
une couche de revêtement placée à la périphérie externe de la fibre optique et comprenant au moins une couche de revêtement interne et une couche de revêtement externe,
dans lequel la matière pour la formation d'une couche de revêtement interne contient une résine de polyamide (A),
la matière pour la formation d'une couche de revêtement externe contient une résine de polyamide (C), et
la matière pour la formation de la couche de revêtement externe contient au moins soit une résine de polyphénylène-éther (B) soit une résine de polyamide semi-aromatique (C1),
dans lequel, si la matière pour la formation de la couche de revêtement externe contient une résine de polyphénylène-éther (B), la résine de polyamide (C) est constituée d'au moins une résine choisie parmi le polyamide 6, le polyamide 66 et le polyamide MXD6.

2. Câble en fibre optique selon la revendication 1, dans lequel la teneur totale en résine de polyphénylène-éther (B) et en résine de polyamide (C) est fixée à 50 % en poids ou plus de la matière pour la formation de la couche de revêtement externe.

3. Câble en fibre optique selon la revendication 1 ou 2, dans lequel la résine de polyphénylène-éther (B) et la résine de polyamide (C) dans la matière pour la formation de la couche de revêtement externe sont ajustées pour avoir un rapport massique (C/B) dans une plage de 10/100 à 300/100.

4. Câble en fibre optique selon la revendication 1, dans lequel la matière pour la formation de la couche de revêtement externe comprend une résine de polyamide semi-aromatique (C1).

5. Câble en fibre optique selon la revendication 4, dans lequel la teneur en résine de polyamide semi-aromatique (C1) dans la matière pour la formation de la couche de revêtement externe est fixée à 50 % en poids ou plus.

6. Câble en fibre optique selon la revendication 4 ou 5, dans lequel la résine de polyamide semi-aromatique (C1) est constituée d'au moins une résine choisie parmi le polyamide MXD6, le polyamide 6T, le polyamide 6I, le polyamide 6T/I et le polyamide 9T.

7. Câble en fibre optique selon l'une quelconque des revendications 4 à 6, dans lequel la résine de polyamide semi-aromatique (C1) est une résine de polyamide ayant un cycle benzénique substitué en position méta.

8. Câble en fibre optique selon l'une quelconque des revendications 1 à 7, dans lequel la résine de polyamide (A) est constituée d'au moins une résine choisie parmi le polyamide 11, le polyamide 12 et le polyamide 1010.

9. Câble en fibre optique selon l'une quelconque des revendications 1 à 8, dans lequel la teneur en résine de polyamide (A) dans la matière pour la formation de la couche de revêtement interne est fixée à 50 % en poids ou plus.

10. Câble en fibre optique selon l'une quelconque des revendications 1 à 9, dans lequel la matière pour la formation de la couche de revêtement externe comprend en outre un retardateur de flamme (D).

11. Câble en fibre optique selon la revendication 10, dans lequel le retardateur de flamme (D) est un composé azoté.

12. Câble en fibre optique selon l'une quelconque des revendications 1 à 11, dans lequel la matière pour la formation de la couche de revêtement externe comprend en outre un antioxydant (E).

13. Câble en fibre optique selon la revendication 12, dans lequel l'antioxydant (E) est constitué d'au moins soit un antioxydant à base de phénol à empêchement stérique soit un antioxydant à base de soufre.

14. Corps mobile comprenant un câble en fibre optique selon l'une quelconque des revendications 1 à 13.
